# EUROPEAN PATENT APPLICATION

(11) **EP 1 712 817 A1**
(43) Date of publication of application: **18.10.2006**
(21) Application number: 06007784.9
(22) Date of filing: 13.04.2006
(51) Int. Cl.: F16J 15/447

(54) **Watertight joint for a gearbox**

(30) Priority: 15.04.2005 ES 200500911
(71) Applicant: Gamesa Eolica, S.A. (Sociedad Unipersonal), 31013 Pamplona (Navarra) (ES)
(72) Inventor: Llorente Gonzáles, Jose Ignacio, 31013 Pamplona (Navarra) (ES); Barañano Echebarria, Javier, 31013 Pamplona (Navarra) (ES)

(57) **Abstract**

Watertight joint for a gearbox, which has a gearbox closing element (1) comprising a fitted bushing (2), a first sealing joint (3) located after the bushing (2), a metal plate (4) positioned after the first sealing joint (3), an expansion chamber (5) which has a cut out space above the closing element (1), a unit of multiple slots (6), located in a first area before the expansion chamber (5) and a second area after the expansion chamber (5) cut out above the closing element (1), with a labyrinth type layout and a second sealing joint (7) positioned after the second area of slots.

## Description

### FIELD OF THE INVENTION

This invention refers to a layout of a watertight joint used in gearboxes which form part of wind power installations such as wind turbines.

### BACKGROUND OF THE INVENTION

There are currently different known layouts for watertight joints used in a wide variety of devices that have components which rotate in normal working conditions, as is the case with certain wind turbine components.

For example, in document WO-A-03025436, a sealing method is described for a shaft which rotates within a housing, which has one fixed part or stator and one turning part or rotor which is joined to the aforementioned shaft and on it a cover or sealing joint is placed, followed by a channel where liquids which have passed through openings or slots are able to escape, positioned after a unit of watertight joints, a metal ring and a seal ring.

In said method, an expansion chamber as such, in which the aforementioned liquids can accumulate, has not been provided, yet it has provided an area located behind said openings which performs the function of an expansion chamber, although said zone does not have an overflow towards the inside of the unit. In the aforementioned document the mechanism described has a relative movement between the parts where the sealing joint is placed.

ln the particular case of wind turbines the problem of the joints is even more critical, on the one hand, because maintenance at this height is complicated and changing a part can require that the whole wind turbine gearbox has to be lowered with the costs in loss of energy generated and the logistics which this entails.

On the other hand, the watertight joints known until now can, as a consequence of use, lose their sealing capabilities and therefore could produce leaks of lubricants which have high contamination levels and could therefore contaminate the environment.

Moreover, during the maintenance of this type of gearboxes, complete access to the inside of the gearbox must be obtained in order to check the state of the constituent elements and the joints must guarantee that after the maintenance their sealing capabilities continue to be effective.

### DESCRIPTION OF THE INVENTION

This invention refers to a watertight joint for a gearbox, which has a gearbox closing element. The watertight joint is characterized by a fitted bushing configured to avoid the introduction of dirt into the sealing joint zone, a first sealing joint positioned after the aforementioned bushing, configured to avoid the entry of dirt to the inside of the gearbox, a metal plate positioned after the first joint to serve as a support for the first sealing joint and to ensure the correct function of the joint, an expansion chamber which has a cut out area above the closing element, configured to allow the circulation of lubricants, a multiple slot unit, positioned in a first area before the expansion chamber and in a second area after the expansion chamber, cut out above the closing element with a labyrinth type layout and configured to allow the progressive circulation of the lubricant throughout the grooves, and a second sealing joint located after the second area of slots, configured to avoid the leaking of lubricant to the inside of the gearbox.

In this way, a watertight joint which is specially designed for a wind turbine is obtained, which is constituted in such a way that it has a fairly high level of durability in order to allow for gearbox maintenance to be reduced and to avoid having to dismantle the gearbox, which is an extremely delicate task carried out at height, and therefore reduces maintenance costs as far as possible whilst at the same time ensuring that the leaks of lubricants are kept to a minimum which protects the environment.

In addition, using multiple slots like a labyrinth, instead of using only one slot, increases the reliability of the joint function.

Each component slot of the multiple slot unit has a semicircular section and they communicate via small longitudinal spaces through which the lubricant can circulate.

By using this method, if the lubricant were able to pass through these longitudinal spaces it would have a decrease in pressure due to the semicircular slot which would impede its advancement, therefore, the lubricant accumulated in this slot would serve as a barrier to continue to impede the introduction of more lubricant. ln addition, the fact that there are many slots means that if the first slot were not sufficient to impede the lubricant, there are still a succession of slots prepared to carry out the same barrier task.

The expansion chamber has overflows for the inlet and outlet of the lubricant from and towards the multiple slots, filling and emptying said slots by the force of gravity as the unit turns.

The metal plate is made of stainless steel and has a low surface roughness configured to keep its low roughness during the life of the joints, and to not obstruct the function of the first joint over time.

In this way, as the joint is fitted in wind turbines installed outside, it will be working in a dirty and corrosive environment and the metal plate will serve as a barrier against damp and dirt to the inside of the gearbox.

The bushing has one of its inside edges bevelled, configured to allow the expulsion of accumulated dirt towards the outside of the watertight joint, with the expulsion of said dirt from the gearbox being carried out via an orifice cut out of the bushing and the closing element of the watertight joint by centrifugal force, therefore avoiding the entry of dirt by creating an air film.

### BRIEF DESCRIPTION OF THE ILLUSTRATIONS

A brief description of a series of illustrations will be given to help to better understand the invention. These illustrations are expressly listed with the embodiments of this invention and are presented as illustrative examples and are not limited to such.

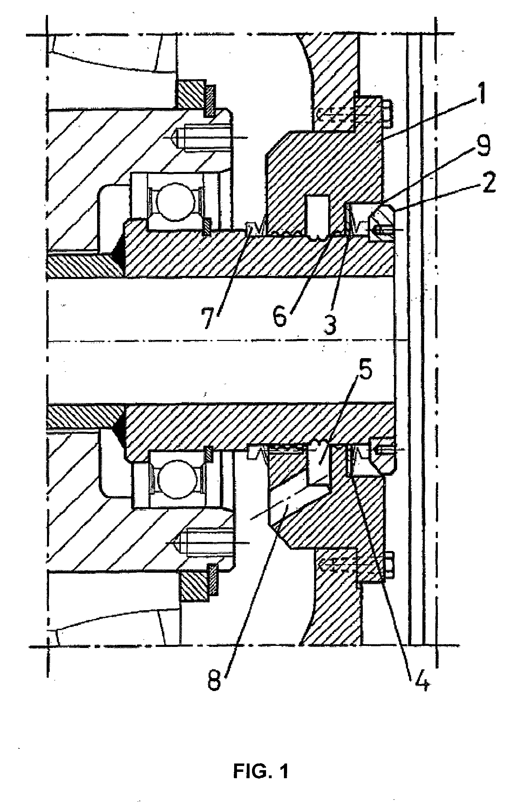

Figure 1 shows a sectioned view of the watertight joint for gearboxes which are the subject of this invention.

### DESCRIPTION OF A PREFERRED EMBODIMENT OF THE INVENTION

The watertight joint for a gearbox, subject of this invention, as can be seen from figure 1, has a closing element 1 and has a bushing 2, which is placed upon the closing element 1 by simple pressure to avoid introducing dirt into the interior of the sealing joint.

The watertight joint also has a first sealing joint 3, which is fitted after the aforementioned bushing 2 the main intention of which is to avoid dirt passing towards the interior of the gearbox. Next to the first sealing joint 3 a metal plate 4 is positioned which serves as a support for said joint and ensures its correct function.

There is also an expansion chamber 5 determined by peripheral cutting above closing element 1, as seen in figure 1, the main objective of which is to allow the circulation in its interior of a certain amount of lubricant. Next to the expansion chamber, the watertight joint has, cut out into the body of the gearbox's closing element, a series of slots 6 which are located in a first area before expansion chamber 5 and in a second area after expansion chamber 5. These slots have a labyrinth type layout and communicate via longitudinal spaces, which allow the lubricant to progressively circulate through them as the unit turns, therefore giving a more effective impregnation of the lubricant as it stays in contact with the areas to be lubricated for longer. In this embodiment of the invention, slots 6 shall have a semicircular section, being able to adopt any other section which is advantageous for the good function of the watertight joint, subject of this invention.

Finally, the watertight joint has a second sealing joint 7, positioned just after the second area of slots 6 and which will avoid the penetration of the lubricant towards the interior of the gearbox itself.

The configuration of the watertight joint described provides a joint which has a certain amount of lubricant in its interior, with this interior being kept totally isolated from both the exterior and the gearbox itself thanks to the first 3 and second 7 sealing joints, producing a movement of the lubricant in the interior of said watertight joint optimized thanks to the existence of slots 6 and the expansion chamber itself.

Expansion chamber 5 has overflows 8 which will allow the inlet and outlet of the lubricant from and towards the multiple slots 6 in their two areas before and after expansion chamber 5, therefore allowing these slots to fill and empty as the unit turns by the simple effect of the force of gravity.

With regard to the metal plate 4, in this embodiment of the invention, it has been made with material normally metal with a low surface roughness which will be maintained during the life of the first sealing joint 3, not compromising its function after time. More specifically, the metal plate has been made of stainless steel due to its surface roughness characteristics.

Bushing 2 has one of its interior edges bevelled and is configured to allow the expulsion of accumulated dirt on the interior of the joint to the exterior of the joint.

To facilitate the aforementioned expulsion of dirt, bushing 2 is provided with an orifice 9 via an orifice which is defined between bushing 2 and closing element 1 of the watertight joint, therefore removing the dirt by the simple effect of centrifugal force: In addition, due to the particular configuration of the bushing and its location with regard to the watertight joint unit, the entry of dirt is avoided due to the creation of an air film which impedes its penetration towards the interior of the watertight joint.

## Claims

1. Watertight joint for a gearbox, which has a gearbox closing element (1) **characterized by** comprising:
- a fitted bushing (2) configured to avoid the introduction of dirt in an area of sealing joints,
- a first sealing joint (3) positioned after the aforementioned bushing (2) configured to avoid the passage of dirt into the interior of the gearbox,
- a metal plate (4) positioned after the first sealing joint (3) configured to serve as a support for the first sealing joint (3) and to ensure the correct function of the joint,
- an expansion chamber (5) which has a cut out space above the closing element (1), configured to allow the circulation of lubricant,
- a unit of multiple slots (6), positioned in a first area before the expansion chamber (5) and a second area after the expansion chamber (5), cut out above the closing element (1) which has a labyrinth type layout the slots of which are configured to allow the progressive circulation throughout them of a lubricant, and
- a second sealing joint (7) located after the second area of slots, configured to avoid the outlet of the lubricant towards the interior of the gearbox.

2. Watertight joint for a gearbox in accordance with claim 1, **characterized by** each slot (6) which comprises the unit of multiple slots having a semicircular section with the slots communicating via small longitudinal spaces through which the lubricant could circulate.

3. Watertight joint for a gearbox in accordance with any of the preceding claims, **characterized by** the expansion chamber (5) having overflows (8) for the inlet and outlet of lubricant from and towards the multiple slots (6) filling and emptying these slots (6) by force of gravity as the unit turns.

4. Watertight joint for a gearbox in accordance with any of the preceding claims, **characterized by** the metal plate (4) having a low surface roughness configured to maintain a low surface roughness during the life of the joints.

5. Watertight joint for a gearbox in accordance with claim 4, **characterized by** the metal plate (4) made of stainless steel.

6. Watertight system for a gearbox in accordance with any of the preceding claims, **characterized by** the bushing (2) with one of the interior edges bevelled and configured to allow the removal of accumulated dirt to the exterior of the watertight joint, with the expulsion of said dirt being carried out via an orifice (9) cut out of said bushing (2) and the closing element of the watertight joint, by the effect of centrifugal force, as well as to avoid the entry of dirt due to the creation of an air film.
